**Europäisches Patentamt**

**European Patent Office**

**Office européen des brevets**

(11) Veröffentlichungsnummer: **0 410 159 A1**

# (12) EUROPÄISCHE PATENTANMELDUNG

(21) Anmeldenummer: **90112438.8**

(22) Anmeldetag: **29.06.90**

(51) Int. Cl.5: **H01M 8/02, H01M 8/24**

(30) Priorität: **24.07.89 CH 2770/89**

(43) Veröffentlichungstag der Anmeldung:
**30.01.91 Patentblatt 91/05**

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Fried, Reinhard**
**Stockackerstrasse 1**
**CH-5415 Nussbaumen(CH)**

(54) **Stromkollektor für Hochtemperatur-Brennstoffzelle.**

(57) Stromkollektor zur Stromführung zwischen benachbarten ebenen stapelförmig angeordneten Hochtemperatur-Brennstoffzellen mit Feststoffelektrolyt (5) auf der Basis von $ZrO_2$, wobei die Sauerstoffelektrode (6) der einen Brennstoffzelle mit der Brennstoffelektrode (7) der nächstfolgenden Brennstoffzelle über eine gasdichte, elektrisch leitende Trennplatte (11) elektrisch leitend verbunden ist, bestehend aus einer Vielzahl von vollelastischen, langzeitstabilen, auf der Sauerstoffseite nichtoxydierenden oder ein Hochtemperatur-Schutzoxyd bildenden federnden, eine Vielzahl von Kontaktstellen gewährleistenden metallischen oder keramischen Elementen (3; 4). Unter einer senkrecht zur Plattenebene ausgeübten Belastung von $10^3$ Pa soll die Durchfederung des Stromkollektors mindestens 0,1 mm betragen.

# Fig.2

EP 0 410 159 A1

## STROMKOLLEKTOR FÜR HOCHTEMPERATUR-BRENNSTOFFZELLE

### TECHNISCHES GEBIET

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engeren Sinne betrifft die Erfindung einen Stromkollektor zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

### STAND DER TECHNIK

Hochtemperatur-Brennstoffzellen mit keramischem Feststoffelektrolyt sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten. Es gibt Elemente in Form von:

Zylindrischen Röhren (Westinghouse),

Konischen Röhren, ähnlich "Schachtelhalm" (Dornier)

Trapezförmigen Wellen (Argonne)

Kreisförmigen Platten (ZTEK).

Bei der Entwicklung von Brennstoffzellen mit keramischem Feststoffelektrolyt hat man sich bisher fast nur mit der Verbesserung und Verbilligung der keramischen Bauteile in Form von röhrenförmigen Brennstoffzellen-Elementen befasst. Über geeignete Anordnungen zur möglichst optimalen Raumausnutzung und der Erzielung hoher Spannungen durch geeignete, für die Serieschaltung der einzelnen Zellen vorteilhafte Konfigurationen finden sich praktisch keine Hinweise.

Im Falle einer stapelartigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion Trennplatten (Bipolarplatten) und elektrische Verbindungsglieder zu den Elektroden (Stromkollektoren) erforderlich. Die bisher bekannten Bauelemente befriedigen vielfach bezüglich der verwendeten Werkstoffe, der Konstruktion und Fabrikation sowie dem Langzeitverhalten den modernen Anforderungen nicht.

Die bekannten, für die Brennstoffzellen verwendeten Grundelemente zeichnen sich meistens durch eine vergleichsweise komplizierte Geometrie aus, die den Bau von kompakten, raumsparenden Anlagen erschwert. Ausserdem ist entsprechend den vorgeschlagenen Formen eine rationelle Fertigung im grosstechnischen Massstab kaum möglich. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von Grund-Bauelementen und deren optimale gegenseitige Anordnung basierend auf keramischen Hochtemperatur-Brennstoffzellen.

Zum Stand der Technik werden die nachfolgenden Druckschriften genannt:

- O. Antonsen, W. Baukal und W. Fischer, "Hochtemperatur-Brennstoffbatterie mit keramischem Elektrolyten", Brown Boveri Mitteilungen Januar/Februar 1966, Seiten 21-30,
- US-A- 4 692 274

- US-A- 4 395 468
- W.J. Dollard und W.G. Parker "An overview of the Westinghouse Electric Corporation solid oxide fuel cell program", Extended Abstracts, Fuel Cell Technology and Applications, International Seminar, Den Haag, Niederlande, 26. bis 29. Oktober, 1987.
- W.J. Rohr, High Temperature Fuel Cells, Solid Electolytes, 1987 by Academic Press, Inc., Seite 431 ff.
- D.C. Fee et al., Monolithic Fuel Cell Development, Argonne National Laborartory, Paper presented at the 1986 Fuel Cell Seminar, Oct. 26 - 29, 1986 Tucson, AZ, U.S. Department of Energy, The University of Chicago.

## DARSTELLUNG DER ERFINDUNG

Der Erfindung liegt die Aufgabe zugrunde, einen Stromkollektor zur Stromführung zwischen flachen, ebenen, stapelförmig angeordneten Hochtemperatur-Brennstoffzellen mit Feststoffelektrolyt anzugeben, welcher, auf beiden Seiten der den Zwischenraum zwischen benachbarten Brennstoffzellen in zwei die unterschiedlichen gasförmigen Medien Brennstoff und Sauerstoffträger unterteilenden Trennplatte angeordnet, einen einwandfreien, mit minimalen Verlusten behafteten Stromübergang sowohl an den Kontaktstellen wie im elektrischen Leiter selbst gewährleistet und einen unveränderten, langzeitstabilen Betrieb ohne Unterbruch garantiert. Der Stromkollektor soll in seiner Herstellung reproduzierbar und kostengünstig ausfallen und anlässlich zur Kontrolle und Untersuchung gezielt vorgenommener Betriebsunterbrüche oder Revisionen leicht auswechselbar sein.

Diese Aufgabe wird dadurch gelöst, dass der eingangs erwähnte Stromkollektor aus einer Vielzahl von langzeitstabilen, bei einer Betriebstemperatur von 800 bis 1000 $^\circ$C vollelastischen, ihrerseits eine Vielzahl von elektrischen Kontaktstellen gewährleistenden, mindestens auf der Sauerstoffseite nichtoxydierenden oder ein Hochtemperatur-Schutzoxyd bildenden federnden Elementen aus einem metallischen und/oder keramischen Werkstoff oder aus einem metallische und/oder keramische Komponenten enthaltenden Verbundwerkstoff besteht und dermassen konstruktiv gestaltet ist, dass er unter einer senkrecht zur Plattenebene aufgebrachten Belastung von $10^3$ Pa eine Durchfederung von mindestens 0,1 mm aufweist.

## WEG ZUR AUSFÜHRUNG DER ERFINDUNG

Die Erfindung wird anhand der nachfolgenden, durch Figuren näher erläuterten Ausführungsbeispiele beschrieben.

Dabei zeigt:

Fig. 1 einen Aufriss/Längsschnitt durch eine Trennplatte mit einem Kontaktfinger als Stromkollektor,

Fig.2 einen Aufriss/Längsschnitt durch eine Trennplatte mit beidseitigen Stromkollektoren und benachbarten parallelen, ebenen Brennstoffzellen,

Fig. 3 einen Grundriss einer Trennplatte mit Stromkollektor, Gasseite,

Fig. 4 einen Grundriss einer Trennplatte mit Stromkollektor in Form eines Kammes,

Fig. 5 einen Aufriss/Längsschnitt durch eine Trennplatte mit Stromkollektor in Form eines Doppelkammes,

Fig. 6 einen Grundriss einer Trennplatte mit Stromkollektor in Form eines Doppelkammes,

Fig. 7 einen Aufriss/Längsschnitt und einen Seitenriss/Querschnitt durch eine Trennplatte und eine benachbarte Brennstoffzelle mit dazwischenzuliegendem, wendelförmigem Stromkollektor,

Fig. 8 einen schematischen Aufriss/Längsschnitt und einen Seitenriss/Querschnitt eines Stromkollektors,

Fig. 9 eine schematische perspektivische Darstellung der Herstellung eines wendelförmigen Stromkollektors aus einer Keramikfaser,

Fig. 10 einem Aufriss/Längsschnitt durch eine Trennplatte und eine benachbarte Brennstoffzelle mit dazwischenliegendem gewelltem Stromkollektor,

Fig. 11 eine schematische perspektivische Darstellung eines wellenförmigen Stromkollektors,

Fig. 12 einen schematischen Längsschnitt durch einen profilierten Stromkollektor aus Drahtgeflecht,

Fig. 13 einen schematischen Schnitt durch einen profilierten Stromkollektor aus Metallgewebe,

Fig. 14 einen Aufriss/Längsschnitt durch eine Trennplatte und eine benachbarte Brennstoffzelle mit dazwischenliegendem spitz gewelltem Stromkollektor,

Fig. 15 eine schematische perspektivische Darstellung und einen Querschnitt eines in zwei Ebenen gewellten Stromkollektors,

Fig. 16 einen schematischen Aufriss/Querschnitt und einen Seitenriss eines in zwei Ebenen gewellten Stromkollektors aus einer Vielzahl von Drahtelementen,

Fig. 17 einen schematischen Grundriss eines in zwei Ebenen spitz gewellten Stromkollektors,

Fig. 18 einen Aufriss/Längsschnitt durch eine Trennplatte und eine benachbarte Brennstoffzelle mit dazwischenliegendem angesintertem Stromkollektor.

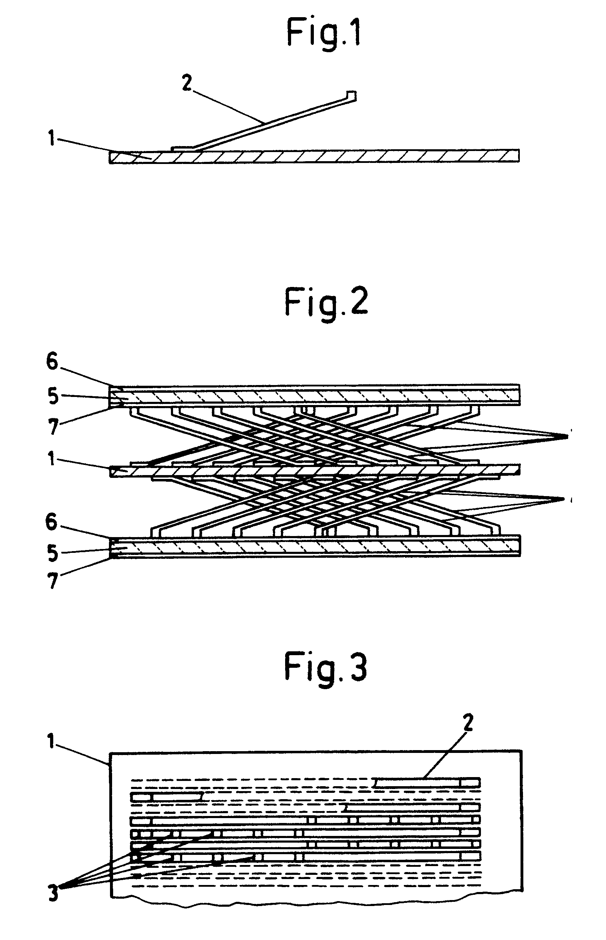

In Fig. 1 ist ein Aufriss/Längsschnitt durch eine Trennplatte mit einem Kontaktfinger als Stromkollektor dargestellt.1 ist die aus einer warmfesten, oxydationsbeständigen Legierung oder aus einem dichten elektrisch leitenden keramischen Stoff be stehende, gasdichte, ebene Trennplatte. Mit ihr ist elektrisch leitend ein Einzelelement 2 des Stromkollektors in Form eines Kontaktfingers fest verbunden.

Fig. 2 stellt einen Aufriss/Längsschnitt durch eine Trennplatte mit beidseitigen Stromkollektoren und benachbarten parallelen, ebenen Brennstoffzellen dar. 1 ist die gasdichte elektrisch leitende Trennplatte, auf welcher auf der Brennstoffseite der aus zahlreichen Kontaktfingern bestehende Stromkollektor 3 befestigt ist. Ein entsprechender, symmetrisch angeordneter Stromkollektor 4 befindet sich auf der Sauerstoffseite. Jede der durch die Stromkollektoren 3 und 4 berührten benachbarten Brennstoffzellen besteht aus dem keramischen Feststoffelektrolyten (dotiertes, stabilisiertes $ZrO_2$) 5, der porösen (positiven) Sauerstoffelektrode 6 aus La/Mn-Perowskit und der porösen (negativen) Brennstoffelektrode 7 aus $Ni/ZrO_2$-Cermet. Die Stromkollektoren 3 und 4 sind aus einer Vielzahl von in mehreren parallelen Ebenen kreuzweise angeordneten Einzel-Kontaktfingern aufgebaut.

Fig. 3 zeigt einen Grundriss einer Trennplatte mit Stromkollektor auf der Gasseite. Die Ausführung entspricht im wesentlichen dem oberen Teil der Fig. 2. Auf der im Grundriss rechteckigen oder quadratischen Trennplatte sitzen in mehreren Ebenen angeordnete Kontaktfinger 2, die gesamthaft den Stromkollektor 3 bilden.

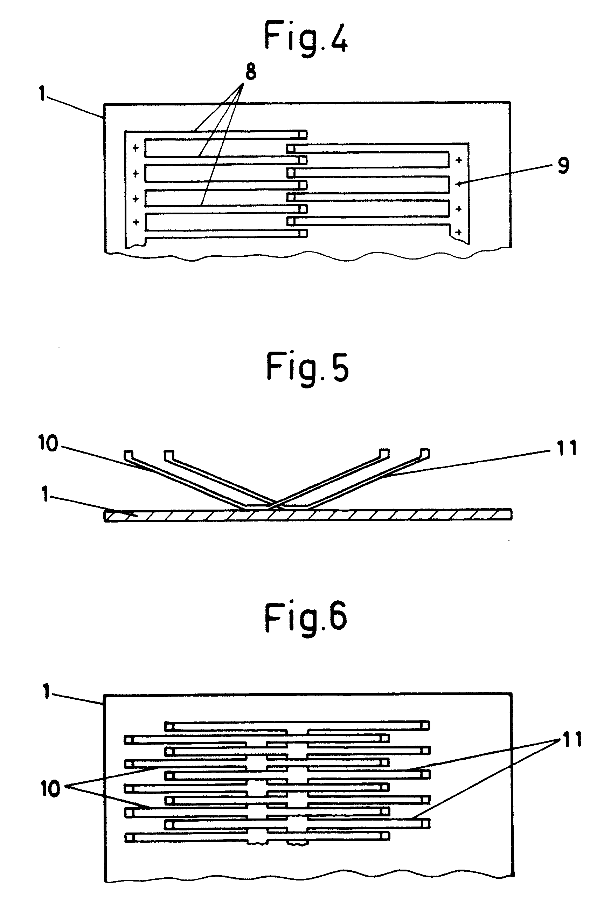

In Fig. 4 ist ein Grundriss einer Trennplatte mit Stromkollektor in Form eines Kammes dargestellt. Der Stromkollektor 8 in Form eines Kammes stellt einen aus mehreren Einzel-Kontaktfingern aus einem Blech oder Band gestanzten zusammenhängenden Körper dar. Der Steg dieses kammartigen Gebildes ist über die Verbindungspunkte 9 (Schweiss- oder Lötstellen) fest mit der Trennplatte 1 verbunden.

Fig. 5 stellt einen Aufriss/Längsschnitt durch eine Trennplatte mit Stromkollektor in Form eines Doppelkammes dar. 10 ist ein in einer 1. Reihe stehenden derartiger Stromkollektor, 11 ein in einer 2. Reihe stehender, gegenüber demjenigen in der 1. Reihe versetzter Stromkollektor. Die aus Blechen gestanzten Stromkollektoren sind analog Fig. 4 auf der Trennplatte 1 befestigt.

Fig. 6 bezieht sich auf einen Grundriss einer Trennplatte mit Stromkollektor in Form eines Doppelkammes. Die Anordnung entspricht im wesentlichen derjenigen von Fig. 5. Die verschiedenen Doppelkämme sind derart ineinander verschachtelt, dass eine kreuzweise Anordnung gebildet und eine möglichst grosse Fläche abgedeckt wird.

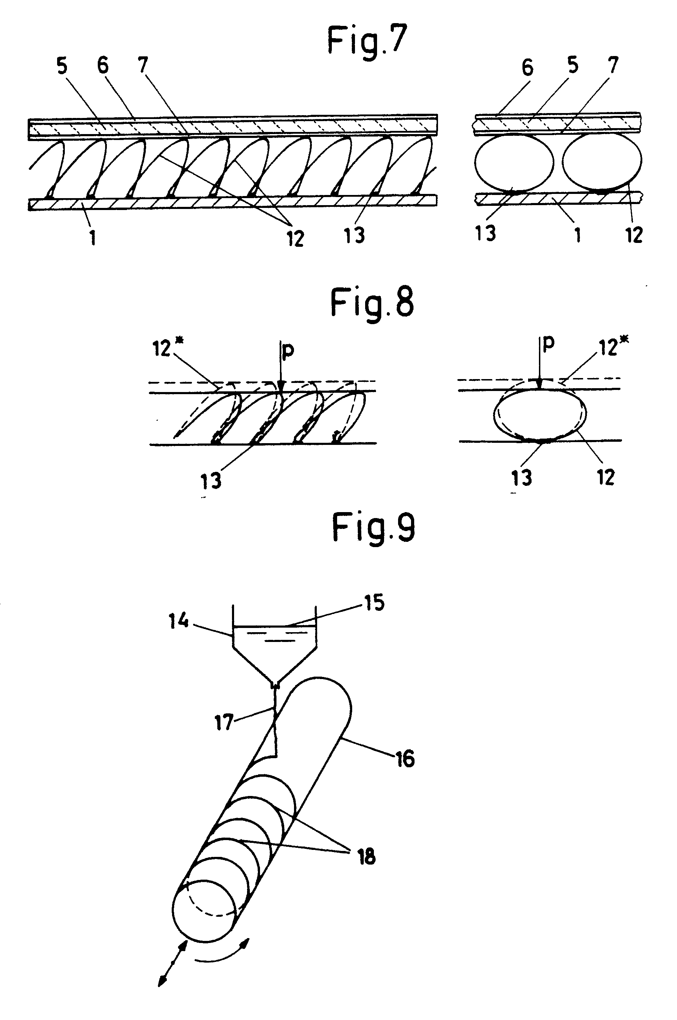

In Fig. 7 ist ein Aufriss/Längsschnitt und ein Seitenriss/Querschnitt durch eine Trennplatte und eine benachbarte Brennstoffzelle mit dazwischenliegendem wendelförmigen Stromkollektor dargestellt. Zwischen der Trennplatte 1 und der Brennstoffzelle (5; 6; 7) ist ein Stromkollektor 12 in Form eines schiefen Wendels (Schraubenfeder) eingeklemmt. Die auf der Trennplatte 1 aufliegenden Windungen des wendels sind mit dieser über die Verbindungspunkte 13 (Schweisspunkt, Lötpunkt, Sinterpunkt) fest verankert. Durch die Schiefstellung der Windungen bezüglich Längsachse des Wendels wird eine vergleichsweise weiche Feder (niedrige Federkonstante) gebildet, was zur Aufnahme der Unebenheiten erstrebenswert ist.

In Fig. 8 ist ein schematischer Aufriss/Längsschnitt und ein Seitenriss/Querschnitt eines wendelförmigen Stromkollektors dargestellt. Die Darstellung entspricht derjenigen der Fig. 7 und zeigt die unter der senkrecht zur Plattenebene wirkenden Druckkraft p erzeugten Verformungen und Verschiebungen. 12 ist der Stromkollektor unter der belastenden Druckkraft p, 12* der Stromkollektor in unbelastetem Zustand. Der ohnehin durch die Schiefstellung der Windungen bedingte elliptische Querschnitt des Wendels erfährt unter der Belastung eine weitere Erhöhung seiner Exzentrizität.

Fig. 9 zeigt eine schematische perspektivische Darstellung der Herstellung eines wendelförmigen Stromkollektors aus einer Keramikfaser. Es ist ein Gefäss 14 für die Keramikschmelze 15 vorgesehen. 16 ist ein rotierender längsverschiebbarer Dorn, auf den ein dünner Giess-Strahl (Fadens 17 aus Keramikschmelze $I_5$ aufgebracht wird. Die drehende sowie die längsgerichtete Bewegung des Dorns 16 ist durch Pfeile angedeutet. 18 ist der auf diese Weise hergestellte Wendel aus Keramikschmelze 15.

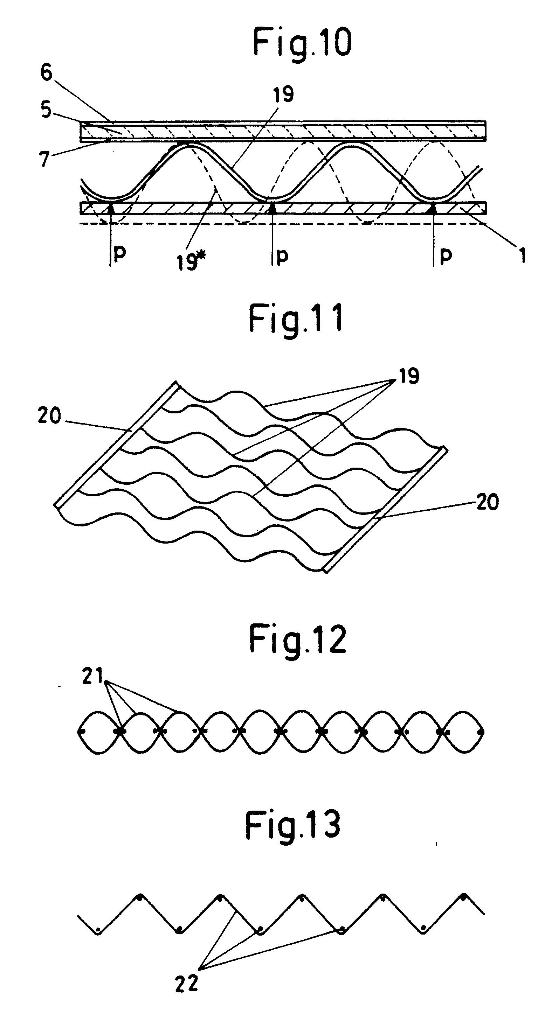

Fig. 10 bezieht sich auf einen Aufriss/Längsschnitt durch eine Trennplatte und eine benachbarte Brennstoffzelle mit dazwischenliegendem gewelltem Stromkollektor. Der aus einem Draht, Band, Netz, Geflecht oder Sieb bestehende wellenförmige Stromkollektor 19* ist in derjenigen Lage dargestellt, die sich unter dem Einfluss der Belastung (Druckkraft p) senkrecht zur Plattenebene einstellt. 1 ist die Trennplatte; die eigentlich aus 3 Schichten bestehende Brennstoffzelle (5; 6; 7) entspricht derjenigen der vorangegange-

4

nen Figuren. Mit 19* ist die Ausgangsform des ursprünglich unbelasteten Stromkollektors angedeutet.

In Fig. 11 ist eine schematische perspektivische Darstellung eines wellenförmigen Stromkollektors wiedergegeben. Der aus einzelnen wellenförmigen Drähten bestehende Stromkollektor 19 weist an zwei gegenüberliegenden Seiten je eine versteifende Leiste 20 als Querverbindung auf. Die Wellen der einzelnen Drähte 19 sind gegeneinander versetzt, um eine möglichst gleichmässige Verteilung der über die ganze Plattenebene an den Kontaktstellen wirkenden Druckkräfte und einen guten Stromübergang zu gewährleisten.

In Fig. 12 ist ein schematischer Längsschnitt durch einen profilierten Stromkollektor aus Drahtgeflecht dargestellt. Der Stromkollektor 21 ist in Form eines gewellten oder mit Noppen und Vertiefungen versehenes Drahtgeflechts ausgeführt. Dabei sind die in einer Reihe liegenden Profile (Ausbuchtungen, Einbuchtungen) gegen diejenigen der nächstfolgenden Reihe um eine halbe Teilung versetzt, um eine möglichst gleichmässige Berührung über den ganzen Querschnitt der Trennplatte und der Brennstoffzelle zu gewährleisten.

Fig. 13 bezieht sich auf einen schematischen Schnitt durch einen profilierten Stromkollektor aus Metallgewebe. Im vorliegenden Fall handelt es sich um einen Stromkollektor 22 in Form eines plissierten Gewebes. Die Verformungs- und Verschiebungsverhältnisse dieser Anordnung sind mit denjenigen der Figur 10 vergleichbar.

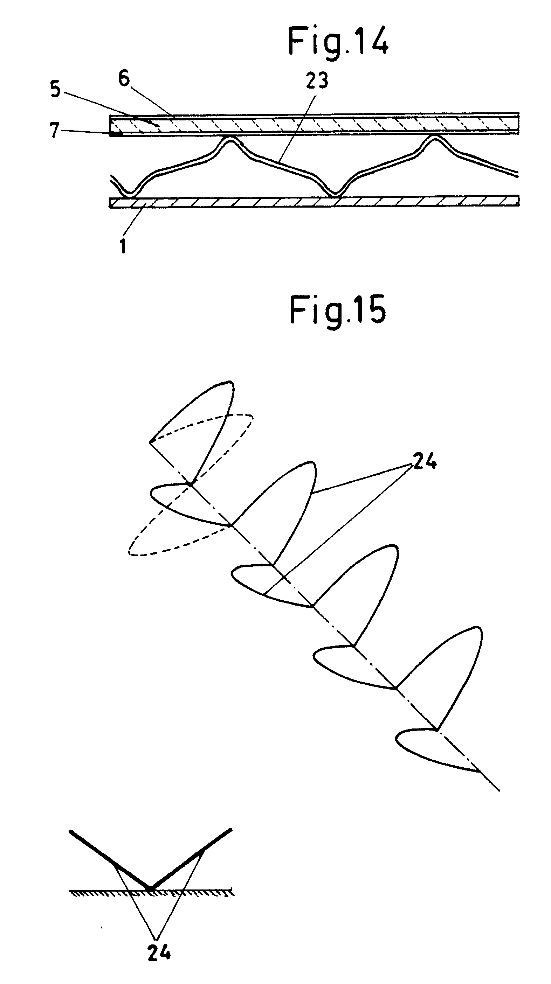

Fig. 14 zeigt einen Aufriss/Längsschnitt durch eine Trennplatte und eine benachbarte Brennstoffzelle mit dazwischenliegendem spitz gewelltem Stromkollektor. Die Bezugszeichen 1, 5, 6 und 7 entsprechen genau denjenigen der Fig. 10. 23 ist ein Stromkollektor in Form eines spitz gewellten Drahtes. Dadurch werden die Berührungsflächen gegenüber der klassischen Ausführung in Sinusform verkleinert und der spezifische Kontaktdruck entsprechend erhöht.

In Fig. 15 ist eine schematische perspektivische Darstellung und ein Querschnitt eines in zwei Ebenen gewellten Stromkollektors wiedergegeben. Der Draht, der ursprünglich in einer Ebene als Sinuslinie vorliegt (durch einen gestrichelten Wellenzug angedeutet), wird um seine Mittellinie in zwei unter einem bestimmten Winkel (zum Beispiel 120°) stehende Ebenen abgekantet. 24 stellt diesen Stromkollektor in Form eines in zwei Ebenen gewellten Drahtes dar.

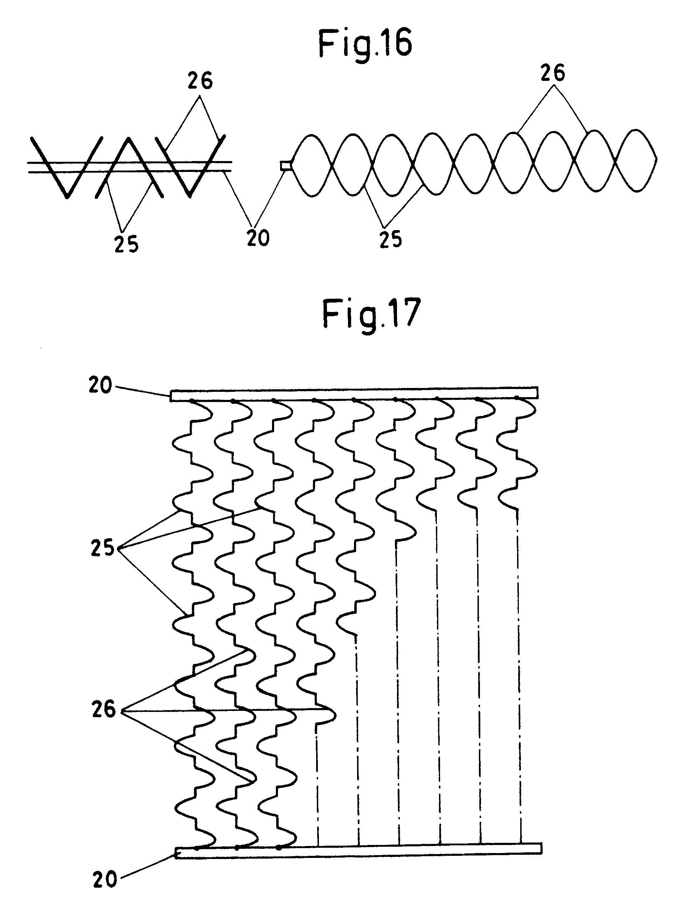

Fig. 16 zeigt einen schematischen Aufriss/Querschnitt und einen Seitenriss eines in zwei Ebenen gewellten Stromkollektors bestehend aus einer Vielzahl von Drahtelementen.Die im Querschnitt V-förmigen fuss-ständigen Stromkollektoren 25 in Form von in zwei Ebenen gewellten Drähten wechseln mit entsprechenden kopf-ständigen Stromkollektoren 26 ab. Beide Gruppen (25 bzw. 26) sind durch versteifende Leisten 20 als Querverbindungen an gegenüberliegenden Seiten zusammengehalten.

In Fig. 17 ist ein schematischer Grundriss eines in zwei Ebenen spitz gewellten Stromkollektors dargestellt. Der Grundaufbau entspricht demjenigen der Fig. 16. Hier sind die Wellen jedoch spitz ausgeführt, um die im Scheitel des sinusförmigen Bogenteils sich befindende Konaktfläche klein zu halten. Die Bezugszeichen entsprechen denjenigen der Fig. 16.

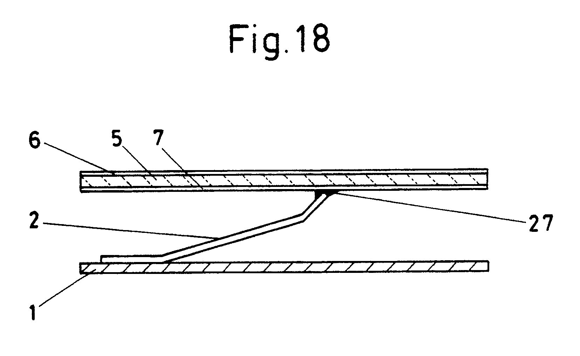

Fig. 18 zeigt einen Aufriss/Längsschnitt durch eine Trennplatte und eine benachbarte Brennstoffzelle mit dazwischenliegendem aufgesintertem Stromkollektor. Der Aufbau entspricht weitgehend der Fig. 1. 1 ist die Trennplatte aus einer warmfesten Legierung, 2 ein Einzelelement des Stromkollektors. Statt eines am Ende verdickten Kontaktfingers ist hier eine gesinterte Verbindung 27 zur porösen Brennstoffelektrode 7 aus $Ni/ZrO_2$-Cermet vorgesehen. 5 ist der Feststoffelektrolyt aus $ZrO_2$, 6 die poröse Sauerstoffelektrode. Wärmedehnungen werden durch elastische Verformungen des vergleichsweise langen lamellenförmigen Teils des Stromkollektors 2 aufgenommen.

Ausführungsbeispiel 1:

Siehe Figuren 1, 2 und 3!

Aus einer warmfesten oxydationsbeständigen Eisenbasislegierung mit der Werkstoffnummer 1.4762 gemäss Deutscher Norm DIN mit der Bezeichnung X10CrAl24 wurde ein aus einzelnen Kontaktfingern 2 und einer Trennplatte 1 bestehender Stromkollektor gefertigt. Der Werkstoff hatte die nachfolgende Zusammensetzung:

Cr = 24 Gew.-%
Al = 1,5 Gew.-%
Si = 0,9 Gew.-%
Mn = 0,8 Gew.-%

C = 0,10 Gew.-%
Fe = Rest

Die 0,8 mm dicke Trennplatte 1 war rechteckig und wies eine Länge von 70 mm und eine Breite von 35 mm auf. Die aus dem selben Werkstoff durch Walzen eines Drahtes hergestellten Kontaktfinger 2 hatten die nachfolgenden Bemessungen:

| Länge: | ca. 21 mm |
|---|---|
| Höhe für die Sauerstoffseite: | ca. 6 mm |
| Höhe für die Brennstoffseite: | ca. 3 mm |
| Breite: | ca. 2 mm |
| Dicke: | ca. 0,2 mm |

Der mit der Trennplatte 1 zu verbindende Fuss des Kontaktfingers hatte eine Länge (horizontal) von ca. 3 mm, der sich am anderen Ende befindliche Kopf eine Höhe (vertikal) von ca. 1 mm. Der zwischen dem Kontaktfinger 2 und der Trennplatte 1 eingeschlossene Winkel betrug für die Sauerstoffseite (Luft) ca. 12 °, für die Brennstoffseite (CH₄) ca. 5°. Je ein Kontaktfinger 2 auf der Sauerstoffseite und auf der Brennstoffseite wurde in einer mit einer entsprechenden Haltevorrichtung ausgestatteten Punktschweissmaschine fest mit der Trennplatte 1 verbunden. Auf diese Weise wurden mehrere, abwechslungsweise nach der einen und nach der anderen Seite gerichtete Reihen von Kontaktfingern 2 zu Stromkollektoren 3 (Brennstoffseite) und 4 (Sauerstoffseite) zusammengebaut. Es wurden total 7 x 14 = 98 Kontaktstellen auf eine projizierte aktive Fläche von ca. 20 cm² geschaffen. Das Ganze wurde zum Schluss durch leichtes Anpressen zwischen planparallelen Stahlbacken derart gerichtet, dass die Höhenunterschiede der einzelnen Kontaktfinger 2 untereinander weniger als 0,1 mm ausmachten. Bei einer spezi fischen Belastung von ca. 1,5 • 10³ Pa senkrecht zur Plattenebene betrug die mitten Einfederung der Kontaktfinger 2 ca. 0,2 mm. Damit konnten alle Unebenheiten und Rauhigkeiten sowie Fabrikationstoleranzen der aus keramischen Feststoffelektrolyt 5, Sauerstoffelektrode 6 und Brennstoffelektrode 7 bestehenden benachbarten Brennstoffzellen ausgeglichen werden. Der Stromübergang an den Kontaktstellen wurde durch eine zusätzliche Edelmetallbeschichtung der Köpfe der Kontaktfinger 2 gewährleistet.


Ausführungsbeispiel 2:


Siehe Fig. 4!

Ein aus mehreren Reihen von Kontaktfingern ähnlich 2 (vergleiche Fig. 1) und einer Trennplatte 1 bestehendes zur Stromführung dienendes Bauelement wurde aus gestanzten Blechteilen aufgebaut. Der verwendete Werkstoff war eine Fe/Cr/Al-Legierung mit der Nummer 1.4767 gemäss DIN mit der Bezeichnung CrAl 20 5. Der Werkstoff hatte folgende Zusammensetzung:
Cr = 20 Gew.-%
Al = 5 Gew.-%
Si = 0,8 Gew.-%
Mn = 0,7 Gew.-%
C = 0,08 Gew.-%
Fe = Rest

Die Trennplatte 1 hatte dieselben Abmessungen wie in Beispiel 1. Aus einem 0,2 mm dicken Blech wurde eine Anzahl von Stromkollektoren 8 in Form eines Kammes ausgestanzt. Die einzelnen Kontaktfinger hatten eine Breite von 1,2 mm. Der laterale Zwischenraum zwischen zwei Kontaktfingern betrug 2 mm. Der Rücken des Kammes bestand aus einer ca. 3 mm breiten Leiste. Die Kämme wurden durch Pressen in die der Fig. 1 entsprechende Form des einzelnen Kontaktfingers gebracht, wobei die Geome trie weitgehend derjenigen von Beispiel 1 entsprach. Die Kämme wurden derart wechselseitig ineinander geschoben, dass der verbleibende laterale Zwischenraum (Spiel) zwischen benachbarten, sich kreuzenden Kontaktfingern 0,4 mm betrug. Im Zuge dieses Aufbaues wurden die Kämme an ihren Leistenpartien durch Schweisspunkte 9 mit der Trennplatte 1 geheftet und zusätzlich durch ein Hochtemperaturlot ganzflächig fest verbunden. Das Löten erfolgte unter Vakuum bei einer Temperatur von 1200 ° C. Die beim Stanzen entstandenen scharfen Schnittkanten der Köpfe der Kontaktfinger wurden durch Beizen weggeätzt und abgerundet. Das Richten der fertigen Körper erfolgte in gleicher Weise wie unter Beispiel 1 angegeben.

Ausführungsbeispiel 3:

Siehe Figuren 5 und 6!

Analog Beispiel 2 wurden aus Blechen Stromkollektoren 10 und 11 in Form von Doppelkämmen gestanzt, in die abgewinkelte Form gepresst und durch Punktschweissen und Hartlöten mit der Trennplatte 1 verbunden. Sowohl für die Doppelkämme 10, 11 wie für die Trennplatte 1 wurde eine Ni/Cr-Legierung mit der Werkstoffnummer 2.4869 gemäss DIN mit der Bezeichnung NiCr 8020 mit nachfolgender Zusammensetzung verwendet:

Cr = 20 Gew.-%
Si = 1,2 Gew.-%
Mn = 0,8 Gew.-%
Cu = 0,4 Gew.-%
Cn = 0,12 Gew.-%
Ni = Rest

Die Trennplatte hatte eine Dicke von 0,6 mm, eine Länge von 50 mm und eine Breite von 30 mm. Die einzelnen Kontaktfinger eines Doppelkammes hatten folgende Abmessungen:

| Länge: | ca. 7 mm |
|---|---|
| Höhe für die Sauerstoffseite: | ca. 3 mm |
| Höhe für die Brennstoffseite: | ca. 2 mm |
| Breite: | ca. 0.8 mm |
| Dicke: | ca. 0,08 mm |

Der laterale Zwischenraum zwischen zwei Kontaktfingern betrug 1,4 mm. Das verbleibende laterale Spiel zwischen benachbarten, sich kreuzenden Kontaktfingern betrug somit 0,3 mm. Im übrigen wurde genau gleich wie unter Beispiel 2 angegeben, vorgegangen.

Ausführungsbeispiel 4:

Siehe Figuren 7 und 8!

Das stromführende Bauelement betand aus einer gasdichten elektrisch leitenden Trennplatte 1 und einem Stromkollektor 12 in Form von schiefen Wendeln. Für beides wurde der in Beispiel 3 erwähnte Werkstoff NiCr80 20 verwendet.

Die blank geschliffene Trennplatte 1 hatte eine Dicke von 0,3 mm. Ein Draht von 0,15 mm wurde zu einem Wendel (Schraubenfeder) von ca. 7 mm Windungsdurchmesser gewunden und in Abschnitte unterteilt, die der Breite der Trennplatte 1 entsprachen. Dann wurden die Enden eines jeden Wendels durch Punktschweissen an der Trennplatte 1 angeheftet. Nun wurden die Wendel durch Aufbringen einer Last senkrecht zur Plattenebene unter Horizontalschub in ihrer Längsachse derart deformiert, dass die Windungen ovalen Querschnitt annahmen und die Windungen schief zur Plattenebene zu stehen kamen (vergl. Figuren 7 und 8). Die Höhe der Wendel senkrecht zur Plattenebene betrug noch ca. 3 mm für die Brennstoffseite, 4 mm für die Sauerstoffseite. Das Ganze wurde in einer hitzebeständigen Vorrichtung in dieser Lage unter Vakuum während 5 h bei einer Temperatur von 980 °C gehalten. Dabei sinterten die einzelnen Wellen des Stromkollektors 12 an ihren Berührungspunkten (Sinterpunkte 13) fest mit der Trennplatte 1 zusammen. Ausserdem wurde auf diese Weise eine irreversible Warmverformung erzielt, sodass die Windungen der Wendel nach Abkühlung und Entlastung nicht mehr in ihre, dem Ausgangszustand entsprechende zylindrische Form zurückwichen. Die federnden Eigenschaften wurden jedoch weitgehend erhalten. Unter einer senkrecht zur Plattenebene aufgebrachten Belastung von $2 \cdot 10^{-2}$ N pro Windung federte der Stromkollektor 12 $\mu$m ca. 0,22 mm durch.

Ausführungsbeispiel 5:

Siehe Fig. 9!

Der Stromkollektor auf der Brennstoffseite hatte ungefähr die geometrische Form eines schiefen Wendels (vergl. 12 in Fig. 7). Er wurde aus einer Keramikschmelze 15 in Form eines auf einen rotierenden, längsverschiebbaren Dorn 16 aufgebrachten Giess-Strahles 17 hergestellt. Als Werkstoff wurde Siliziumkarbid verwendet, welches bei Betriebstemperatur eine vergleichsweise gute metallische elektrische Leitfähigkeit besitzt. Der Wendel 18 aus erstarrter Keramikschmelze wurde direkt in der endgültigen schiefwinkligen Form hergestellt, indem der Dorn 16 im Sinne der andeutenden Pfeile in seinen Bewegungen programmiert geführt wurde.

Die Trennplatte 1 (vergl. Fig. 7) wurde als keramische Verbundkonstruktion ausgeführt und bestand auf der Brennstoffseite aus einer 1,5 mm dicken Platte aus dichtgesintertem Siliziumkarbid, auf der Sauerstoffseite aus einer nach dem Plasmaspritzverfahren aufgebrachten, 200 µm dicken Schicht aus einem strontiumdotierten La/Mn-Perowskit. Dazwischen befand sich eine zuvor auf die Siliziumkarbidplatte galvanisch aufgebrachte 60 µm dicke Nickelschicht als Diffusionssperre. Mehrere Wendel 18 wurden schraubenartig ineinandergedreht, sodass eine Art "Teppich" mit zahlreichen Kontaktstellen entstand.

Ihre Enden wurden mit einem Keramikkleber auf der Trennplatte 1 fixiert. Nun wurde das Ganze während 20 h bei einer Temperatur von 1400 °C unter Argonatmosphäre gesintert. Dabei bildeten sich an den Berührungsstellen der Windungen feste Verbindungspunkte (vergl. 13 in Fig. 7 und 8). Unter einer Belastung von $5 \cdot 10^{-2}$ N pro Windung betrug die Einfederung ca. 50 µm.

Ausführungsbeispiel 6:

Siehe Fig. 10!

Aus einem 0,15 mm dicken, 1,2 mm breiten Band wurden wellenförmige Stromkollektoren 19 aus der Eisenbasislegierung X10CrAl24 gefertigt (vergl. Beispiel 1). Eine Vielzahl derartiger Bänder wurde an einem Ende über eine ebene bandförmige Leiste (vergl. Fig. 11) durch Punktschweissen verbunden. Die Stromkollektoren hatten in unbelastetem Zustand die durch das Bezugszeichen 19* angedeutete Form. Unter dem Einfluss der Belastung (Druckkraft p) konnten sie sich frei deformieren und lateral bewegen, was mit dem Bezugszeichen 19 (Betriebszustand) angedeutet ist.

Die Wellenform braucht nicht notwendigerweise eine Sinusform zu sein. Es können beliebige Wellenformen wie Dreieck, Rechteck, Trapez, asymmetrische, schiefe Wellen etc. verwirklicht werden. Die Formen hängen unter anderem von der zu erzielenden Federkonstante (Steifigkeit, Einfederung) des Stromkollektors ab.

Ausführungsbeispiel 7:

Siehe Fig. 10!

Ähnlich Beispiel 6 bestand der wellenförmige Stromkollektor 19 aus einem aus einem 0,1 mm dicken Blech gestanzten kammartigen Körper (vergl. Fig. 4), dessen 1 mm breite Lamellen anschlies send in einer Walzvorrichtung gewellt wurden. Die Wellenlänge betrug ca. 6 mm. Die Einfederung im eingebauten Zustand betrug unter einer Belastung senkrecht zur Plattenebene von ca. $5 \cdot 10^{-2}$ N pro Welle ca. 0,10 mm.

Ausführungsbeispiel 8:

Siehe Fig. 11!

Aus einem 0,25 mm dicken Draht wurden wellenförmige Stromkollektoren 19 aus der Fe/Cr/Al-Legierung CrAl20 5 hergestellt (vergl. Beispiel 2). Eine Vielzahl derartiger Drähte wurde an beiden Enden über eine ebene bandförmige versteifende Leiste 20 (Querverbindung) durch Punktschweissen zu einem gitterartigen Körper verbunden. Dann wurde dieser Stromkollektor auf eine überschliffene Trennplatte 1 aus dem gleichen Werkstoff gelegt, senkrecht zur Plattenebene belastet und unter Vakuum bei 1200 °C während 3 h an den Berührungspunkten angesintert (örtlich verschweisst). Im Gegensatz zu Beispiel 6 (Fig. 10) ist hier die laterale Bewegung nicht gegeben. Dank des geringen Widerstandsmomentes des vergleichsweise dünnen Drahtes wird die notwendige Nachgiebigkeit in vertikaler Richtung gewährleistet.

Ausführungsbeispiel 9:

Siehe Fig. 12!

Ein Stromkollektor 21 in Form eines mit Noppen und Vertiefungen versehenen Drahtgeflechtes wurde für die Brennstoffseite aus Reinnickel hergestellt. Für die Sauerstoffseite wurde die Legierung NiCr80 20 (Siehe Beispiel 3) verwendet. Die Maschenweite der Drahtgeflechte betrug ca. 0,3 mm, die Drahtdicke 0,1 mm. Die Drahtgeflechte wurden in einer Pressvorrichtung zu 2 bzw. 3 mm hohen, Wellen bzw. Noppen aufweisenden profilierten Körpern verformt. Die auf diese Weise erhaltenen Kontaktab stände betrugen 2,5 bis 6 mm, sodass eine Kontaktdichte von ca. 13 bis 15 Kontaktstellen pro $cm^2$ erzielt werden konnte. Die Einfederung unter einer Belastung von 8 $\cdot$ 10-2 N pro Erhebung betrug ca. 0,08 mm.

Ausführungsbeispiel 10:

Siehe Fig. 13!

Es wurde ein Stromkollektor 22 in Form eines plissierten Gewebes hergestellt. Der für das Metallgewebe verwendete Werkstoff X10CrA124 entsprach demjenigen von Beispiel 1. Der Draht des Metallgewebes hatte einen Durchmesser von 0,1 mm. Die Maschenweite betrug 0,6 mm. Das Gewebe wurde in Falten mit einer Teilung von ca. 3 mm und einer totalen Höhe (doppelte Amplitude) von ca. 1,6 mm plissiert. Der mittlere Abstand der punktförmigen Kontakte betrug ca. 3 mm. Bei einer vertikalen Belastung (senkrecht zur Plattenebene) von ca. 80 $\cdot$ $10^{-3}$ N per Kontaktpunkt betrug die Einfederung des Stromkollektors ca. 0,05 mm.

Ausführungsbeispiel 11:

Siehe Fig. 14!

Es handelte sich bei diesem Beispiel darum, die effektiv wirksame Fläche der elektrischen Kontaktstellen zu reduzieren, um dadurch den spezifischen Kontaktdruck zu erhöhen und einen möglichst niedrigen Übergangswiderstand zu erzielen. Dies wurde dadurch erreicht, dass ein Stromkollektor 23 in die Form eines spitz gewellten Drahtes gebracht wurde. Zu diesem Zweck wurde ein ursprünglich in vergleichsweise flachen Sinus- oder Trapezwellen vorliegender Draht in eine Form gepresst wurde, welche die Scheitel der Wellen im Sinne einer Erhöhung der Amplitude nach aussen drückte. Dabei wurde eine relativ spitz zulaufende Scheitelpartie mit kleinem Krümmungsradius und vergleichsweise hoher Steifigkeit erzielt. Als Ausgangsmaterial wurde ein Draht von 0,25 mm Durchmesser aus dem Werkstoff CrAl205 verwendet. Die Wellenlänge betrug 12 mm, die totale Höhe (doppelte Amplitude) ca. 3,5 mm. Unter einer Kraft von 35 $\cdot$ $10^{-3}$ N per Kontaktpunkt wurde eine Einfederung senkrecht zur Plattenebene von 0,15 mm erreicht.

Ausführungsbeispiel 12:

Siehe Fig. 15!

Es wurde ein Stromkollektor 24 in Form eines in zwei Ebenen gewellten Drahtes hergestellt. Ein 0,25 mm dicker Draht aus dem Werkstoff X10CrAl24 wurde zunächst in einer Ebene in ungefähr sinusförmige Wellen von 12 mm Wellenlänge und 5 mm Amplitude gelegt. Dieses wellenförmige Gebilde wurde in der Längsachse (Knotenlinie, Nulldurchgang der Sinuskurve) derart abgekantet, dass - im Querschnitt gesehen - ein V-förmiger Körper mit einem Öffnungswinkel von ungefähr 107° gebildet wurde. Dementsprechend betrug der Abstand der Scheitellinien der Sinuskurve (V-Öffnungsbreite) ca. 8 mm, die Höhe des V-förmigen Körpers ca. 3 mm. Unter einer Kraft von $40 \cdot 10^{-3}$ N pro Kontaktpunkt betrug die Einfederung senkrecht zur Plattenebene ca. 0,12 mm. Eine Vielzahl derartiger abgekanteter wellenförmiger Stromkollektoren 24 wurde, um je eine halbe Teilung versetzt, ineinandergeschachtelt zu einem Ganzen mit einer Trennplatte aus dem gleichen Werkstoff vereinigt, indem die Wellen an beiden Enden an den Knotenpunkten mit je einem Schweisspunkt fixiert wurden. Diese vollelastische, in ihrer Lage langzeitstabile Konstruktion ergab eine ausgezeichnete Anpassung an die Unebenheiten und Fabrikationstoleranzen der benachbarten Bauelemente.

Ausführungsbeispiel 13:

Siehe Fig. 16!

Ein als Gesamtstromkollektor dienender Körper wurde aus einzelnen Drähten aus dem Werkstoff CrAl205 wie folgt hergestellt. Ein Draht von 0,12 mm Durchmesser wurde zunächst in eine sinusähnliche Welle von ca. 10 mm Wellenlänge und 1,5 mm Amplitude gelegt und ähnlich Beispiel 11 (vergl. Fig. 14) durch Streckung an den Nulldurchgängen und Ausbuchtung an den Scheiteln in eine spitz gewellte Form gebracht. Nun wurde jede zweite Welle, gemessen von einem Scheitelpunkt bis zum übernächsten, um einen Winkel von 60° derart geschränkt (ähnlich den Zähnen eines Sägeblattes), dass - im Querschnitt gesehen -ein V-förmiger Körper entstand. Dann wurde abwechslungsweise ein derartiger fuss-ständiger Stromkollektor 25 neben einem kopfständigen Stromkollektor 26 um eine halbe Wellenlänge versetzt angeordnet und das Ganze mit endseitigen versteifenden Leisten 20 (Querverbindungen) durch Punktschweissen fixiert. Die Höhe des Gesamtstromkollektors betrug ca. 2,7 mm. Unter einer Kontaktkraft von $60 \cdot 10^{-3}$ N pro Berührungspunkt betrug die Einfederung ca. 0,15 mm.

Ausführungsbeispiel 14:

Siehe Figuren 14, 16 und 17!

Aus dem gleichen Werkstoff X10CrAl24 wie unter Beispiel 12 angegeben wurden spitz und in zwei Ebenen gewellte Stromkollektoren 25 und 26 durch Abkanten mit einem Öffnungswinkel von 60° hergestellt. Die Wellenlänge betrug 12 mm, die Amplitude 3,5 mm und die Drahtdicke 0,15 mm. Abwechslungsweise wurden fuss-ständige Stromkollektoren 25 ohne Versetzung neben kopfständigen Stromkollektoren 26 angeordnet und durch Leisten 20 miteinander verbunden. Das Ganze ergab einen Körper von ca. 3 mm Höhe Die Einfederung unter einer Punktlast von $80 \cdot 10^{-3}$ N pro Berührungspunkt betrug ca. 0,13 mm.

Ausführungsbeispiel 15:

Siehe Fig. 18!

Auf einer gasdichten elektrisch leitenden Trennplatte 1 aus dem Werkstoff NiCr8020 wurde ein Einzelelement eines Stromkollektors 2 in Form eines Kontaktfingers aus Reinnickel aufgeschweisst. Die Trennplatte 1 hatte eine Dicke von 0,6 mm, der Stromkollektor eine solche von 0,15 mm. Die Brennstoffzelle bestand aus dem Feststoffelektrolyten 5 und den Elektroden 6 und 7. Auf der Seite der Brennstoffelektrode 7 aus Ni/ZrO$_2$-Cermet wurde eine gesinterte Verbindung 27 mit dem Stromkollektor 2 hergestellt. Zu diesem Zweck wurde die Berührungsstelle mit Nickelpulver von maximal 5 $\mu$m Partikeldurchmesser bestreut und eine Punktbelastung von 50 $\cdot$ $10^{-3}$ N aufgebracht. Dann wurde das Ganze während 1/2 h bei einer Temperatur von 1100 $^{\circ}$C unter Vakuum gesintert. Nach Entlastung konnte weder bei Raumtemperatur noch bei der vorgesehenen Betriebstemperatur von 900 $^{\circ}$C ein merklicher Übergangswiderstand gemessen werden.

Die Erfindung ist nicht auf die Ausführungsbeispiele beschränkt.

Der Stromkollektor zur Stromführung zwischen benachbarten flachen, ebenen, stapelförmig angeordneten HochtemperaturBrennstoffzellen (5; 6; 7) mit Feststoffelektrolyt (5) auf der Basis von dotiertem, stabilisiertem Zirkonoxyd, wobei jeweils die Sauerstoffelektrode (6) der einen Brennstoffzelle mit der Brennstoffelektrode (7) der nächstfolgenden Brennstoffzelle elektrisch verbunden und der zwischen den Elektroden (6; 7) liegende Zwischenraum durch eine gasdichte, elektrisch leitende Trennplatte (1) in zwei, die unterschiedlichen gasförmigen Medien Brennstoff und Sauerstoffträger führenden Räume unterteilt ist, besteht aus einer Vielzahl von langzeitstabilen, bei einer Betriebstemperatur von 800 bis 1000$^{\circ}$C vollelasti schen, ihrerseits eine Vielzahl von elektrischen Kontaktstellen gewährleistenden, mindestens auf der Sauerstoffseite nichtoxydierenden oder ein Hochtemperatur-Schutzoxyd bildenden federnden Elementen aus einem metallischen und/oder keramischen Werkstoff oder aus einem metallische und/oder keramische Komponenten enthaltenden Verbundwerkstoff und ist dermassen konstruktiv gestaltet, dass er unter einer senkrecht zur Plattenebene aufgebrachten Belastung von $10^3$ Pa eine Durchfederung von mindestens 0,1 mm aufweist. In einer Ausführungsart besteht der Stromkollektor aus einer Anzahl von Einzelelementen (2) in Form eines Kontaktfingers, wobei jedes Einzelelement (2) mit der gasdichten, elektrisch leitenden Trennplatte (1) fest, kraftschlüssig und elektrisch leitend verbunden ist.

Vorzugsweise besteht der Stromkollektor aus zahlreichen, sich kreuzenden Reihen (3; 4) von Kontaktfingern sowohl auf der Brennstoffseite wie auf der Sauerstoffseite, die beidseitig fest mit der Trennplatte (1) verbunden sind, wobei die verdickten Enden des Kontaktfingers auf der einen Seite die poröse Sauerstoffelektrode (6) aus La/Mn-Perowskit, auf der anderen Seie die poröse Brennstoffelektrode (7) aus Ni/ZrO$_2$-Cermet unter einem Anpressdruck von mindestens $10^2$ Pa berühren. In vorteilhafter Weise ist er aus einer Anzahl von Kontaktfingern in Form eines Kammes (8) aufgebaut, wobei mehrere derartige Kämme (8) kreuzweise verschachtelt angeordnet und mit Verbindungspunkten 9 auf der Trennplatte 1 befestigt sind oder in Form von Doppelkämmen (10; 11) aufgebaut ist, die ihrerseits wieder aus über ein Mittelteil miteinander verbundenen Kontaktfingern bestehen, wobei das Mittelteil mit der Trennplatte 1 fest verbunden ist.

In einer anderen Ausführungsform besteht der Stromkollektor aus einer Anzahl von schiefen, unter einer senkrecht zur Plattenebene wirkenden Druckkraft p stehenden Wendeln (12), die sich in ihrer Längsachse frei bewegen können oder an ihren Verbindungspunkten (13) durch Schweissen, Löten oder Sintern fest mit der Trennplatte (1) verbunden sind. In einer Variante besteht der Stromkollektor aus mindestens einem Wendel (18) aus erstarrter Keramikschmelze.

In einer weiteren Ausführungsform besteht der Stromkollektor aus einer Vielzahl von wellenförmigen Einzelelementen (19) aus Draht, Band, Netz, Geflecht oder Sieb, wobei die Enden der Einzelelemente (19) mit einer versteifenden Leiste (20) als Querverbidnung zusammengehalten sind. Die Varianten sind im vorliegenden Fall:

Stromkollektor bestehend aus einem mit Noppen und Vertiefungen versehenen oder aus einem gewellten Drahtgeflecht oder aus einem plissierten Gewebe. Stromkollektor bestehend aus einer Vielzahl von spitz gewellten Drähten (23), die die Trennplatte (1) und die gegenüberliegende Elektrode (7) punktförmig berühren. Stromkollektor bestehend aus einer Anzahl von in zwei Ebenen gewellten geknickten Drähten (24), wobei vom Profil her gesehen eine V-Form gebildet wird und der Kontakt auf der einen Seite durch die Knicke, auf der anderen Seite durch die Scheitel der Wellen gewährleistet ist. Stromkollektor bestehend aus einer Anzahl spitz und in zwei Ebenen gewellter Drähte (25, 26), wobei parallel angeordnete Einzelelemente abwechslungsweise fuss-ständig (25)·und kopfständig bezüglich der elektrisch zu verbindenden Plattenebenen liegen und die Enden durch eine als Querverbindung dienende versteifende Leiste (20) zusammengehalten sind.

Der Stromkollektor besteht letztlich vorzugsweise aus einer Anzahl von Einzelelementen (2) in Form eines Kontaktfingers , wobei zwischen dem Einzelelement (2) und der Elektrode (7) eine feste, kraftschlüssige und elektrisch leitende gesinterte Verbindung (27) besteht.

**Ansprüche**

1. Stromkollektor zur Stromführung zwischen benachbarten flachen, ebenen, stapelförmig angeordneten Hochtemperatur-Brennstoffzellen (5; 6; 7) mit Feststoffelektrolyt (5) auf der Basis von dotiertem, stabilisiertem Zirkonoxyd, wobei jeweils die Sauerstoffelektrode (6) der einen Brennstoffzelle mit der Brennstoffelektrode (7) der nächstfolgenden Brennstoffzelle elektrisch verbunden und der zwischen den Elektroden (6; 7) liegende Zwischenraum durch eine gasdichte, elektrisch leitende Trennplatte (1) in zwei, die unterschiedlichen gasförmigen Medien Brennstoff und Sauerstoffträger führenden Räume unterteilt ist, dadurch gekennzeichnet, dass er aus einer Vielzahl von langzeitstabilen, bei einer Betriebstemperatur von 800 bis 1000° C vollelastischen, ihrerseits eine Vielzahl von elektrischen Kontaktstellen gewährleistenden, mindestens auf der Sauerstoffseite nichtoxydierenden oder ein Hochtemperatur-Schutzoxyd bildenden federnden Elementen aus einem metallischen und/oder keramischen Werkstoff oder aus einem metallische und/oder keramische Komponenten enthaltenden Verbundwerkstoff besteht und dermassen konstruktiv gestaltet ist, dass er unter einer senkrecht zur Plattenebene aufgebrachten Belastung von $10^3$ Pa eine Durchfederung von mindestens 0,1 mm aufweist.

2. Stromkollektor nach Anspruch 1, dadurch gekennzeichnet, dass er aus einer Anzahl von Einzelelementen (2) in Form eines Kontaktfingers besteht, wobei jedes Einzelelement (2) mit der gasdichten, elektrisch leitenden Trennplatte (1) fest, kraftschlüssig und elektrisch leitend verbunden ist.

3. Stromkollektor nach Anspruch 1 und 2, dadurch gekennzeichnet, dass er aus zahlreichen, sich kreuzenden Reihen (3; 4) von Kontaktfingern sowohl auf der Brennstoffseite wie auf der Sauerstoffseite besteht, die beidseitig fest mit der Trennplatte (1) verbunden sind, wobei die verdickten Enden des Kontaktfingers auf der einen Seite die poröse Sauerstoffelektrode (6) aus La/Mn-Perowskit, auf der anderen Seite die poröse Brennstoffelektrode (7) aus $Ni/ZrO_2$-Cermet unter einem Anpressdruck von mindestens $10^2$ Pa berühren.

4. Stromkollektor nach Anspruch 1 und 2, dadurch gekennzeichnet, dass er aus einer Anzahl von Kontaktfingern in Form eines Kammes (8) besteht und dass mehrere derartige Kämme (8) kreuzweise verschachtelt angeordnet und mit Verbindungspunkten 9 auf der Trennplatte 1 befestigt sind.

5. Stromkollektor nach Anspruch 1 und 2, dadurch gekennzeichnet, dass er aus einer Anzahl von gegeneinander kreuzweise verschachtelt angeordneten Doppelkämmen (10; 11) besteht, die ihrerseits wieder aus über ein Mittelteil miteinander verbundenen Kontaktfingern bestehen, wobei das Mittelteil mit der Trennplatte 1 fest verbunden ist.

6. Stromkollektor nach Anspruch 1, dadurch gekennzeichnet, dass er aus einer Anzahl von schiefen, unter einer senkrecht zur Plattenebene wirkenden Druckkraft p stehenden Wendeln (12) besteht, die sich in ihrer Längsachse frei bewegen können.

7. Stromkollektor nach Anspruch 1, dadurch gekennzeichnet, dass er aus einer Anzahl von schiefen, unter einer senkrecht zur Plattenebene wirkenden Druckkraft p stehenden Wendeln (12) besteht, die an ihren Verbindungspunkten (13) durch Schweissen, Löten oder Sintern fest mit der Trennplatte (1) verbunden sind.

8. Stromkollektor nach Anspruch 6 oder 7, dadurch gekennzeichnet, dass er aus mindestens einem Wendel (18) aus erstarrter Keramikschmelze besteht.

9. Stromkollektor nach Anspruch 1, dadurch gekennzeichnet, dass er aus einer Vielzahl von wellenförmigen Einzelelementen (19) aus Draht, Band, Netz, Geflecht oder Sieb besteht, wobei die Enden der Einzelelemente (19) mit einer versteifenden Leiste (20) als Querverbindung zusammengehalten sind.

10. Stromkollektor nach Anspruch 1, dadurch gekennzeichnet, dass er aus einem mit Noppen und Vertiefungen versehenen oder aus einem gewellten Drahtgeflecht oder aus einem plissierten Gewebe besteht.

11. Stromkollektor nach Anspruch 1, dadurch gekennzeichnet, dass er aus einer Vielzahl von spitz gewellten Drähten (23) besteht, die die Trennplatte (1) und die gegenüberliegende Elektrode (7) punktförmig berühren.

12. Stromkollektor nach Anspruch 1, dadurch gekennzeichnet, dass er aus einer Anzahl von in zwei Ebenen gewellten geknickten Drähten (24) besteht, wobei vom Profil her gesehen eine V-Form gebildet wird und der Kontakt auf der einen Seite durch die Knicke, auf der anderen Seite durch die Scheitel der Wellen gewährleistet ist.

13. Stromkollektor nach Anspruch 1, dadurch gekennzeichnet, dass er aus einer Anzahl spitz und in zwei Ebenen gewellter Drähte (25, 26) besteht, wobei parallel angeordnete Einzelelemente abwechslungsweise fuss-ständig (25) und kopfständig bezüglich der elektrisch zu verbindenden Plattenebenen liegen und dass die Enden durch eine als Querverbindung dienende versteifende Leiste (20) zusammengehalten sind.

14. Stromkollektor nach Anspruch 1, dadurch gekennzeichnet, dass er aus einer Anzahl von Einzelelementen (2) in Form eines Kontaktfingers besteht, wobei zwischen dem Einzelelement (2) und der Elektrode (7) eine feste, kraftschlüssige und elektrisch leitende gesinterte Verbindung (27) besteht.

# Fig.1

# Fig.2

# Fig.3

Fig.4

Fig.5

Fig.6

# Fig.7

# Fig.8

# Fig.9

# Fig.10

# Fig.11

# Fig.12

# Fig.13

# Fig.14

# Fig.15

# Fig.16

# Fig.17

# Fig.18

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A- 490 742 (BROWN, BOVERI & CIE, AG) * Hauptansprüche und Unteransprüche 4,12; Figur 1; Spalte 3, Zeilen 8-39 * --- | 1 | H 01 M 8/02 H 01 M 8/24 |
| A | FR-A-1 433 469 (CO. FRANCAISE THOMSON-HOUSTON) * Figur 3; Seite 2, linke Spalte, Zeilen 4-28,35-50; Patentansprüche 1,5 * --- | 1,5 | |
| A | PATENT ABSTRACTS OF JAPAN, Band 12, Nr. 65 (E-586)[2912], 27. Februar 1988; & JP-A-62 208 559 (ISHIKAWAJIMA HARIMA HEAVY IND. CO., LTD) 12-09-1987 * Zusammenfassung * --- | 1 | |
| A | PATENT ABSTRACTS OF JAPAN, Band 11, Nr. 83 (E-489)[2530], 13. März 1987; & JP-A-61 239 568 (ISHIKAWAJIMA HARIMA HEAVY IND. CO., LTD) 24-10-1986 * Zusammenfassung * --- | 1,10 | |
| A | PATENT ABSTRACTS OF JAPAN, Band 10, Nr. 289 (E-442)[2345], 2. Oktober 1986; & JP-A-61 109 262 (HITACHI LTD) 27-05-1986 * Zusammenfassung * --- | 1 | RECHERCHIERTE SACHGEBIETE (Int. Cl.5) H 01 M |
| A | PATENT ABSTRACTS OF JAPAN, Band 12, Nr. 273 (E-639)[3120], 29. Juli 1988; & JP-A-63 53 857 (ISHIKAWAJIMA HARIMA HEAVY IND. CO., LTD) 08-03-1988 * Zusammenfassung * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 18-10-1990 | D'HONDT J.W. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 11, Nr. 138 (E-503)[2585], 2. Mai 1987; & JP-A-61 279 068 (ISHIKAWAJIMA HARIMA HEAVY IND. CO., LTD) 09-12-1986 * Zusammenfassung * --- | 1,10 | |
| A | FR-A-2 296 703 (COMMISSARIAT A L'ENERGIE ATOMIQUE) * Figur 2; Patentanspruch 10 * --- | 1 | |
| A | US-A-3 300 344 (D.J. BRAY et al.) --- | | |
| A | FR-A-1 399 157 (UNION CARBIDE CORP.) --- | | |
| A | US-A-3 394 032 (G. DANNER) --- | | |
| P,X | EP-A-0 357 025 (NKK CORP.) * Patentansprüche 1,4,5; Figuren 4,5,6; Seite 4, Zeilen 9-11,37-40,50-51; Seite 5, Zeilen 37,38 * --- | | RECHERCHIERTE SACHGEBIETE (Int. Cl.5) |
| P,X | PATENT ABSTRACTS OF JAPAN, Band 14, Nr. 117 (E-898)[4060], 5. März 1990; & JP-A-1 313 855 (NKK CORP.) 19-12-1989 * Zusammenfassung * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 18-10-1990 | D'HONDT J.W. |

EPO FORM 1503 03.82 (P0403)